# EUROPÄISCHE PATENTSCHRIFT

(11) **EP 2 887 604 B1**
(45) Veröffentlichungstag und Bekanntmachung des Hinweises auf die Patenterteilung: **18.10.2017**
(21) Anmeldenummer: 13198495.7
(22) Anmeldetag: 19.12.2013
(51) Int. Cl.: H04L 29/06, H04L 12/741, H04L 29/08, H04L 12/749

(54) **Verfahren und Telekommunikationsnetz zur Erhöhung der Sicherheit beim paketorientierten Datenaustausch**
Method and telecommunications network for increasing security during packet-oriented data exchange
Procédé et réseau de télécommunications destinés à augmenter la sécurité lors de l'échange de données orienté paquets

(43) Veröffentlichungstag der Anmeldung: 24.06.2015
(73) Patentinhaber: Deutsche Telekom AG, 53113 Bonn (DE)
(72) Erfinder: van den Berge, Fridtjof, 53227 Bonn (DE); Kumar, Amit, 53175 Bonn (DE)
(74) Vertreter: Schwöbel, Thilo K.

(56) Entgegenhaltungen:
- US-A1- 2006 085 861
- US-A1- 2013 152 189
- MURALI BHASKARAN V ET AL: "Tracebacking the Spoofed IP Packets in Multi ISP Domains with Secured Communication", SIGNAL PROCESSING, COMMUNICATIONS AND NETWORKING, 2007. ICSCN '07 . INTERNATIONAL CONFERENCE ON, IEEE, PI, 1. Februar 2007 (2007-02-01), Seiten 579-584, XP031079461, ISBN: 978-1-4244-0996-9
- FERGUSON CISCO SYSTEMS P ET AL: "Network Ingress Filtering: Defeating Denial of Service Attacks which employ IP Source Address Spoofing; rfc2827.txt", 20000501, 1. Mai 2000 (2000-05-01), XP015008610, ISSN: 0000-0003

## Beschreibung

### Stand der Technik

Die Erfindung betrifft ein Verfahren zur Erhöhung der Sicherheit beim paketorientierten Datenaustausch gemäß einem Internet Protokoll zwischen Netzwerk-Knoten eines Telekommunikationsnetzes.

Die Erfindung betrifft ferner ein Telekommunikationsnetz zur Erhöhung der Sicherheit beim paketorientierten Datenaustausch gemäß einem Internet Protokoll zwischen Netzwerk-Knoten des Telekommunikationsnetzes.

Eine Umstellung von SS#7- auf IP-Protokollen wird mit der Erweiterung der Internet-Netzen neue Betrugsszenarien öffnen und diese dazu auch leichter und sicherer verschleiern lassen.

Die unter Verwendung des Internet Protokolls verfügbaren Anwendungen und Dienste werden kontinuierlich umfangreicher und vielfältiger. Beispielsweise werden jetzt immer mehr Dienste von Telefongesellschaften, welche im Mobilfunkbereich vielfach bisher noch über eine SS7-Signalisierung abgewickelt wurden, auf die Verwendung des Internet Protocols (IP) umgestellt. Auch Sprache verschwindet langsam aus den Sprachkanälen (Leitweglenkung) und wird in Internet-Protokoll-Datenpakete gepackt und mit einer hohen Priorisierung im Internet verschickt. Somit können und werden sich insbesondere auch die Betrugsmöglichkeiten deutlich vervielfachen, da mit der Verwendung der SS7 Signalisierung ein höheres Maß nach Sicherheit beispielsweise mit Blick auf die Nachverfolgbarkeit einhergeht. Unter Nutzung des Internet Protokolls werden in Telekommunikationsnetzen neue Betrugsszenarien ermöglicht, beispielsweise die Verschleierung von Internet Protokoll Adressen (IP-Adressen) durch z. B. Proxy-Server, das Umschreiben von E-Mail-Adressierungen in fiktive und lediglich vorgegaukelte E-Mail-Adressierungen oder auch die Autokonfiguration, um IP-Adressen zu erstellen.

Zwischen der Version 4 des Internet Protokolls (IPv4) und der Version 6 des Internet Protokolls (IPv6) gibt es zwar Unterschiede, jedoch ist die Nutzersicherheit gegen Betrug nicht wesentlich verbessert worden.
Unter Nutzung von IPv4 ist es beispielsweise leicht, fiktive Source-IP Adressen (d.h. Herkunfts-Internet-Protokoll-Adressen) in den Kopfdaten (d.h. im sog. Header) einzutragen. Wenn dazu die Nachricht über viele Zwischenknoten bzw. Proxy-Server bis zum Ziel geroutet wird, ist es beispielsweise für die Polizei eine fast unmögliche Aufgabe die Herkunft des Internet-Protokoll-Datenpakets herauszufinden. Auch unter Nutzung von IPv6 gibt es die Möglichkeit, etwa durch Privacy Extensions für Stateless IP-Adressen (RFC 4941), jegliches Nachverfolgen (Tracking) zu erschweren oder sogar auszuschließen.
Der sogenannte Interface Identifier bzw. die MAC-Adresse am Ende eines Internet-Protokoll-Datenpakets in der IPv6-Header Information kann gemäß RFC 4941 geändert werden in sogenannte Global Scope Identifiers, die dazu nicht einzigartig sein müssen. Mit anderen Worten könnte es zur gleichen Zeit mehrere identische Nachrichten mit einer identischen MAC-Adresse geben. Darüber hinaus gibt es durch die sogenannten Global Scope Addresses bzw. Global Unicast Addresses die Möglichkeit, dass eine Zurückverfolgung der IPv6-Adresse, die sichtbar sind in den Datagrammen, nochmals erschwert wird. Die Druckschrift MURALI BHASKARAN V et al, "Tracebacking the Spoofed IP Packets in Multi ISP Domains with Secured Communication", ICSCN '07, IEEE, 22.- 24.Februari 2007, Seiten 579-584 offenbart ein System zur Zurückverfolgung eines IP-Pakets, das den Ursprung einer Folge von IP-Paketen, wenn die Source-Adresse dieser Pakete fiktiv ist, identifiziert. Die Druckschrift FERGUSON P et al, "Network Ingress Filtering: Defeating Denial of Service Attacks which employ IP Source Address Spoofing", RFC 2827, IETF, Mai 2000 offenbart ein Verfahren zum Filtern von Eingangsverkehr um die Verbreitung von DoS-Angriffen, die fiktive Source-IP-Adressen benutzen, zu verhindern. US 2013/152189 offenbart eine Vorrichtung zur Erkennung und Verhinderung von Datenpaketen mit fiktiven Source-Adressen.

Es besteht daher ein Bedarf, bekannte Protokolle bei der Übertragung von Internet-Protokoll-Datenpaketen hinsichtlich ihrer Sicherheit zu verbessern.

### Offenbarung der Erfindung

Der Erfindung liegt die Aufgabe zugrunde, ein Verfahren und ein Telekommunikationsnetz zur Erhöhung der Sicherheit beim paketorientierten Datenaustausch gemäß einem Internet Protokoll zwischen Netzwerk-Knoten eines Telekommunikationsnetzes anzugeben, wobei eine Verbesserung des Sicherheitsniveaus der Datenkommunikation, insbesondere hinsichtlich der Nachverfolgbarkeit bzw. Zurückverfolgbarkeit von Nachrichten, realisiert wird. Diese Aufgabe wird erfindungsgemäß gelöst durch ein Verfahren zur Erhöhung der Sicherheit beim paketorientierten Datenaustausch gemäß einem Internet Protokoll zwischen Netzwerk-Knoten eines Telekommunikationsnetzes, wobei zur Übertragung eines Internet Protokoll-Datenpakets wenigstens ein erster Netzwerk-Knoten eines ersten Anbieters von Telekommunikationsdienstleistungen und ein zweiter Netzwerk-Knoten zusammenwirken, wobei der zweite Netzwerk-Knoten ein Nachbarknoten des ersten Netzwerk-Knoten ist, wobei dem ersten Netzwerk-Knoten eine Identifikationsinformation zugeordnet ist, wobei der zweite Netzwerk-Knoten Zugriff auf die dem ersten Netzwerk-Knoten zugeordnete Identifikationsinformation hat, wobei das Verfahren die folgenden Verfahrensschritte aufweist:
-- in einem ersten Verfahrensschritt wird dem Internet-Protokoll-Datenpaket durch den ersten Netzwerk-Knoten die Identifikationsinformation des ersten Netzwerk-Knoten hinzugefügt,
-- in einem zweiten Verfahrensschritt wird das Internet-Protokoll-Datenpaket zum zweiten Netzwerk-Knoten übertragen,
-- in einem dritten Verfahrensschritt wird durch den zweiten Netzwerk-Knoten eine Prüfung des Internet-Protokoll-Datenpakets durchgeführt, wobei die Prüfung durch den zweiten Netzwerk-Knoten die Prüfung der Identifikationsinformation umfasst, wobei das Internet-Protokoll-Datenpaket vom zweiten Netzwerk-Knoten dann verworfen wird, wenn die Identifikationsinformation des Internet-Protokoll-Datenpaket nicht mit der dem ersten Netzwerk-Knoten zugeordneten Identifikationsinformation übereinstimmt, mit der der zweite Netzwerk-Knoten eine Verbindung hat.

Es ist dadurch gemäß der vorliegenden Erfindung in vorteilhafter Weise möglich, dass ein Betrug besser, schneller und eindeutiger verfolgt werden kann.

Erfindungsgemäß ist es insbesondere von besonderem Vorteil, dass ohne die Notwendigkeit einer Änderung an bestehenden RFC bzw. an Merkmalen des Internet Protokolls (d.h. Features) es möglich, diese Vorteile zu erreichen. Insbesondere würde beispielsweise ein 6-stelliges dezimales Informationsfeld (d.h. sechs binärkodierte (d.h. mit jeweils vier Binärstellen kodierte) Dezimalstellen) unter IPv4 und/oder ein 5-stelliges hexadezimales Informationsfeld unter IPv6 als Pflichtfeld für das versendende Gateway des Providers im IP-Header erforderlich werden bzw. sein mit einem Flag (einstelliger binären Wert).

Bei der Verwendung von IPv4 enthält die Identifikationsinformation (d.h. das vorgenannte 6-stellige Informationsfeld) beispielsweise einen sechsstelligen dezimalen Wert, womit maximal eine Zahl von 0 bis 999999 dargestellt werden kann. Entsprechend könnten in hexadezimaler Schreibweise f423f (d.h. binär 1111.01000010.00111111), also fast 1 Million Netzwerk-Knoten weltweit mittels einer solchen Identifikationsinformation als Zugangs-Gateway für eine versendete Nachricht ins Internet erkennbar, d.h. identifizierbar, gemacht werden.

Bei der Verwendung von IPv6 enthält die Identifikationsinformation (d.h. das vorgenannte 5-stellige hexadezimale Informationsfeld) den fünfstelligen hexadezimalen Wert, womit maximal ein hexadezimaler Wert von fffff, d.h. also 1024*1024 = 1048576 (in dezimaler Schreibweise) verschiedene Möglichkeiten dargestellt werden können. Entsprechend können erfindungsgemäß dezimal 1.048.576 (d.h. binär 00000000.00001111.11111111.11111111) also über 1 Million Netzwerk-Knoten weltweit mittels einer solchen Identifikationsinformation als Zugangs-Gateway für eine versendete Nachricht ins Internet erkennbar, d.h. identifizierbar, gemacht werden.

Beim sogenannten Dual-Stack, d.h. IPv4 parallel zu IPv6 - IP-Übermittlungen für die Übergangszeit für die anstehende Migration von IPv4 zu IPv6 - werden beiden Identifikationsinformationsmerkmale zu dem jeweiligen IP-Header geschrieben. Entsprechend ist in einem solchen Fall das 6-stellige dezimale Informationsfeld im IPv4-Header vom binären Wert her gleich mit dem 5-stelligen hexadezimalen Informationsfeld im IPv6-Header.

Erfindungsgemäß ist es besonders bevorzugt, wenn nur zusätzliche Knoten eine neue sequentielle Nummer aus einem Nummernrange bekommen, der einem Internet-Provider zugewiesen wird. Bestehende Netzwerk-Knoten, die ersetzt werden, übergeben deren Kennung an die neuen Maschinen, d.h. die neuen Netzwerk-Knoten. Entsprechend bleiben Nummern aus Nummernbereichen (Nummernrangen) erhalten, wenn Knoten ausgewechselt werden in einem Netz.

Erfindungsgemäß ist es vorgesehen, dass zur Übertragung des Internet Protokoll-Datenpakets neben dem ersten und zweiten Netzwerk-Knoten ein dritter Netzwerk-Knoten zusammenwirkt und dass das Internet-Protokoll-Datenpaket eine Sprung-Information aufweist, die bei jeder Übertragung von einem vorherigen Netzwerk-Knoten zu einem weiteren Netzwerk-Knoten verändert wird, wobei der dritte Netzwerk-Knoten aufgrund der Sprung-Information des Internet-Protokoll-Datenpaket erkennt, dass die Prüfung der Identifikationsinformation im zweiten Netzwerk-Knoten erfolgreich war, und das Internet-Protokoll-Datenpaket weiterleitet.

Es wird hierdurch erfindungsgemäß bewirkt, dass der Prüfungsaufwand beim dritten Netzwerk-Knoten besonders gering gehalten werden kann und somit wenig zusätzliche Ressourcen erfordert.
Erfindungsgemäß ist es ferner bevorzugt vorgesehen, dass die Identifikationsinformation bei der Verwendung von IPv4 und bei der Verwendung von IPv6 wenigstens 24 Binärstellen bzw. 3 Byte umfasst.

Ferner ist es erfindungsgemäß bevorzugt vorgesehen,
-- dass die Identifikationsinformation bei der Verwendung von IPv4 wenigstens sechs binärkodierte Dezimalstellen, d.h. insgesamt 24 Binärstellen (d.h. 6 binärkodierte Dezimalstellen, die jede mit 4 bit kodiert ist), umfasst bzw.
-- dass die Identifikationsinformation bei der Verwendung von IPv6 wenigstens fünf Hexadezimalstellen (d.h. insgesamt 20 Binärstellen) umfasst.

Erfindungsgemäß ist es besonders bevorzugt vorgesehen, dass dem Internet-Protokoll-Datenpaket durch den ersten Netzwerk-Knoten neben der Identifikationsinformation des ersten Netzwerk-Knoten eine Prüfinformation hinzugefügt wird, wobei die Prüfinformation anzeigt, dass die dem ersten Netzwerk-Knoten zugeordnete Identifikationsinformation dem Internet-Protokoll-Datenpaket hinzugefügt wurde.

Hierdurch ist es erfindungsgemäß in vorteilhafter Weise möglich, dass auch anhand der Prüfinformation festgestellt werden kann, dass die Identifikationsinformation im Internet-Protokoll-Datenpaket eingetragen ist. Die vorgenannte Prüfinformation ist beispielsweise als sogenannter Flag vorgesehen, d.h. ein einstelliger binärer Wert (welcher entweder den Wert '0' oder '1' annehmen kann). Der Wert '0' würde in einem so angepassten IP-Header bedeuten, dass die Nachricht (d.h. das Internet-Protokoll-Datenpaket) nicht versehen ist mit der Identifikationsinformation des Netzwerk-Knotens (d.h. unter IPv4 der üblichen 6-stelligen dezimalen bzw. unter IPv6 der 5-stelligen hexadezimalen Kennung bzw. Identifikationsinformation des initialen Routers bzw. Servers), der als Gateway für die Nachricht (bzw. das Internet-Protokoll-Datenpaket) ins Internet verwendet wird und damit von einem Nachbarrouter (bzw. zweiten Netzwerk-Knoten) weder rausgeschickt, noch weitergeleitet werden darf. Ein Wert '1' wird als Flag gesetzt, wenn die Identifikationsinformation gesetzt ist (d.h. die 5-stellige hexadezimale Information (bei IPv6) bzw. die 6-stelligen dezimalen Information (bei IPv4) als Kennung des initialen Routers (bzw. ersten Netzwerk-Knoten), der als Gateway für die Nachricht (bzw. das Internet-Protokoll-Datenpaket) ins Internet dient, in dem Informationsfeld (d.h. der Identifikationsinformation) geschrieben wird.

Erfindungsgemäß ist es bevorzugt vorgesehen, dass die Prüfinformation des Flags ein einstelliger Binärwert ist.

Ein weiterer Gegenstand der vorliegenden Erfindung ist ein Telekommunikationsnetz zur Erhöhung der Sicherheit beim paketorientierten Datenaustausch gemäß einem Internet Protokoll zwischen Netzwerk-Knoten des Telekommunikationsnetzes, wobei zur Übertragung eines Internet Protokoll-Datenpakets wenigstens ein erster Netzwerk-Knoten eines ersten Anbieters von Telekommunikationsdienstleistungen und ein zweiter Netzwerk-Knoten zusammenwirken, wobei der zweite Netzwerk-Knoten ein Nachbarknoten des ersten Netzwerk-Knoten ist, wobei dem ersten Netzwerk-Knoten eine Identifikationsinformation zugeordnet ist, wobei der zweite Netzwerk-Knoten Zugriff auf die dem ersten Netzwerk-Knoten zugeordnete Identifikationsinformation hat, wobei das Telekommunikationsnetz derart konfiguriert ist, dass:
-- dem Internet-Protokoll-Datenpaket durch den ersten Netzwerk-Knoten die Identifikationsinformation des ersten Netzwerk-Knoten hinzugefügt wird,
-- das Internet-Protokoll-Datenpaket zum zweiten Netzwerk-Knoten übertragen wird,
-- durch den zweiten Netzwerk-Knoten eine Prüfung des Internet-Protokoll-Datenpakets durchgeführt wird, wobei die Prüfung durch den zweiten Netzwerk-Knoten die Prüfung der Identifikationsinformation umfasst, wobei das Internet-Protokoll-Datenpaket vom zweiten Netzwerk-Knoten dann verworfen wird, wenn die Identifikationsinformation des Internet-Protokoll-Datenpaket nicht mit der dem ersten Netzwerk-Knoten zugeordneten Identifikationsinformation übereinstimmt, auf die der zweite Netzwerk-Knoten Zugriff hat. Erfindungsgemäß ist es ferner bevorzugt - insbesondere im Hinblick auf das Telekommunikationsnetz -, dass das Telekommunikationsnetz ein Weitverkehrsnetz ist. Ferner ist es - insbesondere im Hinblick auf das Telekommunikationsnetz - erfindungsgemäß vorgesehen, dass zur Übertragung des Internet Protokoll-Datenpakets neben dem ersten und zweiten Netzwerk-Knoten ein dritter Netzwerk-Knoten zusammenwirkt und dass das Internet-Protokoll-Datenpaket eine Sprung-Information aufweist, die bei jeder Übertragung von einem vorherigen Netzwerk-Knoten zu einem weiteren Netzwerk-Knoten verändert wird, wobei der dritte Netzwerk-Knoten aufgrund der Sprung-Information des Internet-Protokoll-Datenpaket erkennt, dass die Prüfung der Identifikationsinformation im zweiten Netzwerk-Knoten erfolgreich war, und das Internet-Protokoll-Datenpaket weiterleitet.

Weiterhin ist es erfindungsgemäß - insbesondere mit Blick auf das Telekommunikationsnetz - bevorzugt, dass die Identifikationsinformation bei der Verwendung von IPv4 und bei der Verwendung von IPv6 wenigstens 24 Binärstellen bzw. 3 Bytes umfasst. Ferner ist es - insbesondere im Hinblick auf das Telekommunikationsnetz - erfindungsgemäß bevorzugt, dass dem Internet-Protokoll-Datenpaket durch den ersten Netzwerk-Knoten neben der Identifikationsinformation des ersten Netzwerk-Knoten eine Prüfinformation hinzugefügt wird, wobei die Prüfinformation anzeigt, dass die dem ersten Netzwerk-Knoten zugeordnete Identifikationsinformation dem Internet-Protokoll-Datenpaket hinzugefügt wurde.

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder auf einem programmierbaren Telekommunikationsendgerät und/oder auf einem Kommunikations-Schnittstellenmodul, insbesondere in Teilen auf einem programmierbaren Telekommunikationsendgerät und in Teilen auf einem Kommunikations-Schnittstellenmodul, ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder auf einem programmierbaren Telekommunikationsendgerät und/oder einem Kommunikations-Schnittstellenmodul, insbesondere in Teilen auf einem programmierbaren Telekommunikationsendgerät und in Teilen auf einem Kommunikations-Schnittstellenmodul, ausgeführt wird.

Erfindungsgemäß ist vorgesehen, dass - nach dem Abschicken eines Internet-Protokoll-Datenpakets durch einen ersten Netzwerk-Knoten - der erste darauffolgende Router (d.h. der zweite Netzwerk-Knoten), der das Internet-Protokoll-Datenpaket (bzw. eine Nachricht) zum Empfang oder zum Weiterleiten erhält, die Identifikationsinformation überprüft. Hierdurch wird erfindungsgemäß sichergestellt, dass die eingetragene Kennung, d.h. die Identifikationsinformation, durch (gegenüber dem ersten Netzwerk-Knoten) benachbarte Netzwerk-Knoten überprüft wird (als bekannter Nachbar). Nur wenn diese (d.h. die Identifikationsinformation) stimmt, kann die Nachricht bzw. das Internet-Protokoll-Datenpaket, verarbeitet werden. Falls jedoch die Sprunginformation, d.h. die Hop-Sequenz, anzeigt, dass die Nachricht bzw. das Internet-Protokoll-Datenpaket bereits (vom nächsten Nachbarn, d.h. dem zweiten Netzwerk-Knoten, des aussendenden Knotens, d.h. dem ersten Netzwerk-Knoten) geprüft wurde, findet (aufgrund des Wertes der Sprunginformation bzw. Hop-Sequenz) keine weitere Prüfung auf die Identifikationsinformation und/oder die Prüfinformation statt.

Wenn in einem Telekommunikationsnetz ein neuer Router (bzw. ein neuer Netzwerk-Knoten) eingebracht wird, wird diese parallel zu seinen Neighbour Discovery-Aktivitäten (d.h. der Erkennung von Nachbarknoten) auch seine Identifikationsinformation (d.h. die 5-Byte hexadezimale (IPv6) bzw. 6-Byte dezimale (IPv4) Kennung) übermitteln. Somit werden alle Router (bzw. Netzwerk-Knoten) die als Hop neben dem neu ins Providernetz eingebrachten (zusätzlichen) Router über dessen Adressierung (wie auch die Identifikationsinformation, d.h. seine 5- Byte hexadezimale bzw. 6-Byte dezimale Kennung) informiert.

Erfindungsgemäß ist es daher bevorzugt, dass neben der Identifikationsinformation (d.h. dem 5- bzw. 6-stelligen Informationsfeld bzw. dieser Kennung) noch die Prüfinformation (bzw. das vorgenannte Flag) gebraucht wird, welches angibt, dass das vorgenannte Informationsfeld (bzw. die Identifikationsinformation) gesetzt ist (bzw. mit einer Kennung befüllt wurde) und es laut Software des Routers den Router zulässt, dass die betreffende Nachricht bzw. das Internet-Protokoll-Datenpaket rausgeschickt wird.

Solche Netzwerk-Knoten (bzw. Router/Server) mit einer solchen Einstellung können in einem solchen erfindungsgemäßen Szenario nur IP-Pakete erfolgreich zustellen, wenn die Prüfinformation (bzw. die Flag-Kennung) angibt, dass das 5- bzw. 6-stellige Informationsfeld (bzw. die Identifikationsinformation) gesetzt ist, d.h. einen Eintrag bekommen hat. Nachrichten bzw. Internet-Protokoll-Datenpakete können von anderen Netzwerk-Knoten (bzw. Hubs bzw. Routern) nicht empfangen und ggf. weitergeleitet werden, wenn die Prüfinformation (bzw. das Flag) nicht dem Wert entspricht für ein eingetragenes (bzw. gesetztes) 5- bzw. 6-stelliges Informationsfeld (bzw. Identifikationsinformation).

Das ursprüngliche Gateway (d.h. der erste Netzwerk-Knoten) des initialen Netzbetreibers/Providers für den Zugang ins Internet bzw. der Netzbetreiber der Quelle der Nachricht (bzw. der Quelle des Internet-Protokoll-Datenpakets) soll in seinem empfangenden (Netz-)Router der Source-Nachricht dessen erkennbaren Kennung bzw. ID-Wert in der IP-Header des zum verschickenden Nachrichts schreiben, als erster Hop in der Vermittlung, bevor diese weiter geroutet werden darf. Hierzu gibt neben der Identifikationsinformation (d.h. der 5- bzw. 6-stelligen Kennung) auch die Prüfinformation (d.h. das Flag), die sich nach dem Eintrag des ID-Wertes (d.h. der Identifikationsinformation) über die Software von binär '0' in '1' (bzw. umgekehrt) ändert.

Mit der Prüfinformation (d.h. dem Flag), die den Wert (bzw. die binäre Größe) '1' hat, dürfen Nachrichten, die von der Quelle (d.h. dem ersten Netzwerk-Knoten) herausgeschickt werden, vom ersten Hop-Router (d.h. dem zweiten Netzwerk-Knoten) herausgeschickt werden. Der zweiter Hop-Router (d.h. der zweite Netzwerk-Knoten) überprüft die Einträge des ersten Hops (d.h. des ersten Netzwerk-Knotens), der Nachbar-Router, der die Nachricht im Ethernet / Internet geroutet hat, und von allen nachfolgenden Routern weitergeleitet bzw. zugestellt werden. Da die Router hier nachfolgend nach dem ersten Hop die Nachricht weiterleiten oder zustellen sollen, wird wegen der durchlaufene Hops (> 1) weder die Prüfinformation (d.h. das Flag) noch die Identifikationsinformation (d.h. der ID-Wert in der Nachricht) überprüft.

In China gibt es beispielsweise ca. 220 Internet-Provider. Damit dürfte sich die Gesamtzahl von unterschiedlichen Providern unterhalb von ca. 40.000 bewegen. Entsprechend sollte eine Identifikationsinformation mit sechs (binärkodierten) dezimalen Stellen bzw. mit fünf (binärkodierten) hexadezimalen Stellen ausreichend sein.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

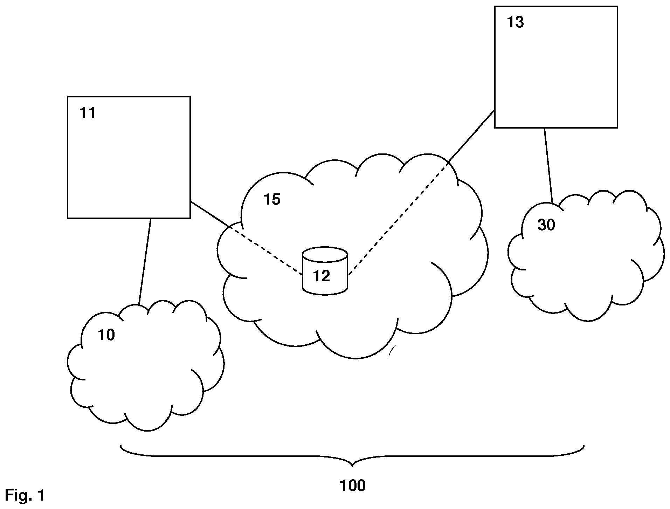

- **Figur 1**: zeigt eine schematische Ansicht eines erfindungsgemäßen Telekommunikationsnetzes mit verschiedenen Netzwerk-Knoten.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

In Figur 1 ist schematisch eine Ansicht eines erfindungsgemäßen Telekommunikationsnetzes 100 mit verschiedenen Netzwerk-Knoten dargestellt. Ein erstes privates Netzwerk 10, beispielsweise eines Senders einer E-Mail-Nachricht, und ein zweites privates Netzwerk 30, beispielsweise eines Empfängers der E-Mail-Nachricht, ist beispielhaft dargestellt. Das erste private Netzwerk 10 ist mit einem Netzwerk-Knoten 11 eines Anbieters von Telekommunikationsdienstleistungen verbunden. Das zweite private Netzwerk 30 ist mit einem dritten Netzwerk-Knoten 13 verbunden, beispielsweise eines weiteren Anbieters von Telekommunikationsdienstleistungen. Ein weiterer Netzbereich 15 ist zwischen dem ersten und dritten Netzwerk-Knoten 11, 13. Dem weiteren Netzbereich 15 entspricht beispielsweise ein öffentliches Internet-Netzwerk bzw. ein Teil davon. Im weiteren Netzbereich 15 ist ein zweiter Netzwerk-Knoten 12 vorhanden, der sowohl mit dem ersten Netzwerk-Knoten 11 als auch mit dem dritten Netzwerk-Knoten 13 verbunden ist. Falls nun eine Nachricht, beispielsweise eine E-Mail, vom ersten privaten Netzwerk 10 zum zweiten privaten Netzwerk 30 zu übersenden ist, werden Internet-Protokoll-Datenpakete vom ersten Netzwerk-Knoten 11 ausgesendet und über den zweiten Netzwerk-Knoten 12 zum dritten Netzwerk-Knoten 13 übertragen. In der Abbildung hier oben ist das Verschicken und Empfangen einer E-Mail-Nachricht grafisch dargestellt. Der Kunde (beispielsweise des ersten privaten Netzwerks 10, etwa mit der Kennung AQZ, Fridtjof van den Berge) erstellt (beispielsweis mit einem Laptop / Mobiltelefon / Pad / Rechner / Server / Tablet) eine E-Mail-Nachricht und verschickt diese über seinen Provider Z-Mail (d.h. den ersten Netzwerk-Knoten 11) an den Empfänger, d.h. das zweiten private Netzwerk 30 (beispielsweise Amit Kumar, mit der Adresse amit.kumar@topa.message.com). Die E-Mail-Nachricht verlässt das Z-Mail Netz (d.h. den ersten Netzwerk-Knoten 11) in Richtung zum dritten Netzwerk-Knoten 13 (TopA-Message Netz). Vom Provider TopA-Message (d.h. vom dritten Netzwerk-Knoten 13) wird die E-Mail-Nachricht an z. B. Laptop / Mobiltelefon / Pad / Rechner / Server / Tablet vom Amit Kumar übermittelt.

Eine Betrugs E-Mail wird (beispielsweise mit einem Trojaner in einer ZIP-Anlage) an einer Zieladresse in einem Land A geschickt, beispielsweise über das Netz eines Anbieters von Telekommunikationsdienstleistungen XY im Land B. XY bekommt in diesem Beispiel die E-Mail-Nachricht jedoch über einen anderen Anbieter von Telekommunikationsdienstleistungen YZ im Land B. Somit ist der Anbieter von Telekommunikationsdienstleistungen YZ (beispielsweise E-Mailprovider) dazu verpflichtet, die Identifikationsinformation (d.h. den ID-Wert) seines Gateways (d.h. des ersten Netzwerk-Knotens), das die Nachricht (bzw. das Internet-Protokoll-Datenpaket) rausschickt, in die Kopfinformation des betreffenden Internet-Protokoll-Datenpakets (d.h. in den IP-Header) zu schreiben. Sobald dies (automatisch über die Router-Software) geschehen ist, erfolgt die Flag-Änderung vom '0' auf '1', d.h. die Änderung der Prüfinformation.

Hierdurch wird festgelegt welcher erste Netzwerk-Knoten (d.h. welches Kundennetz bzw. welcher Kunden-Knoten) der Ursprung der Nachricht (bzw. des Internet-Protokoll-Datenpakets) ist und es wird trotz der Nutzung von z. B. Proxy-Servern, um zum Ziel bzw. End-"Kunden" (d.h. zum dritten Netzwerk-Knoten 13) zu kommen, dennoch klar sein, wer den Betrug bzw. den "Angriff" zum z. B. Ausspähen gestartet hat.

Der Provider, der die Nachricht initial vermittelt hat, kann jetzt zeitnah angesprochen werden über einen IP-Betrugsverdacht und der Provider kann jetzt gezielt in seinem Gateway überprüfen woher bzw. vom welchen seiner Kunden die Nachricht kam.

## Patentansprüche

1. Verfahren zur Erhöhung der Sicherheit beim paketorientierten Datenaustausch gemäß einem Internet Protokoll zwischen Netzwerk-Knoten eines Telekommunikationsnetzes (100), wobei zur Übertragung eines Internet Protokoll-Datenpakets wenigstens ein erster Netzwerk-Knoten (11) eines ersten Anbieters von Telekommunikationsdienstleistungen und ein zweiter Netzwerk-Knoten (12) zusammenwirken, wobei der zweite Netzwerk-Knoten (12) ein Nachbarknoten des ersten Netzwerk-Knoten (11) ist, wobei dem ersten Netzwerk-Knoten (11) eine Identifikationsinformation zugeordnet ist, wobei der zweite Netzwerk-Knoten (12) Zugriff auf die dem ersten Netzwerk-Knoten (11) zugeordnete Identifikationsinformation hat, wobei das Verfahren die folgenden Verfahrensschritte aufweist:
-- in einem ersten Verfahrensschritt wird dem Internet-Protokoll-Datenpaket durch den ersten Netzwerk-Knoten (11) die Identifikationsinformation des ersten Netzwerk-Knoten (11) hinzugefügt,
-- in einem zweiten Verfahrensschritt wird das Internet-Protokoll-Datenpaket zum zweiten Netzwerk-Knoten (11) übertragen,
-- in einem dritten Verfahrensschritt wird durch den zweiten Netzwerk-Knoten (12) eine Prüfung des Internet-Protokoll-Datenpakets durchgeführt, wobei die Prüfung durch den zweiten Netzwerk-Knoten die Prüfung der Identifikationsinformation umfasst, wobei das Internet-Protokoll-Datenpaket vom zweiten Netzwerk-Knoten (12) dann verworfen wird, wenn die Identifikationsinformation des Internet-Protokoll-Datenpaket nicht mit der dem ersten Netzwerk-Knoten (11) zugeordneten Identifikationsinformation übereinstimmt, auf die der zweite Netzwerk-Knoten (12) Zugriff hat, **dadurch gekennzeichnet, dass** zur Übertragung des Internet Protokoll-Datenpakets neben dem ersten und zweiten Netzwerk-Knoten (12) ein dritter Netzwerk-Knoten (13) zusammenwirkt und dass das Internet-Protokoll-Datenpaket eine Sprung-Information aufweist, die bei jeder Übertragung von einem vorherigen Netzwerk-Knoten zu einem weiteren Netzwerk-Knoten verändert wird, wobei der dritte Netzwerk-Knoten (13) aufgrund der Sprung-Information des Internet-Protokoll-Datenpaket erkennt, dass die Prüfung der Identifikationsinformation im zweiten Netzwerk-Knoten (12) erfolgreich war, und das Internet-Protokoll-Datenpaket weiterleitet.

2. Verfahren nach Anspruch 1, **dadurch gekennzeichnet, dass** die Identifikationsinformation bei der Verwendung von IPv4 und bei der Verwendung von IPv6 wenigstens 24 Binärstellen umfasst.

3. Verfahren nach einem der vorhergehenden Ansprüche, **dadurch gekennzeichnet, dass** die Identifikationsinformation bei der Verwendung von IPv4 wenigstens sechs binärkodierte Dezimalstellen umfasst.

4. Verfahren nach einem der vorhergehenden Ansprüche, **dadurch gekennzeichnet, dass** die Identifikationsinformation bei der Verwendung von IPv6 wenigstens fünf Hexadezimalstellen umfasst.

5. Verfahren nach einem der vorhergehenden Ansprüche, **dadurch gekennzeichnet, dass** dem Internet-Protokoll-Datenpaket durch den ersten Netzwerk-Knoten (11) neben der Identifikationsinformation des ersten Netzwerk-Knoten (11) eine Prüfinformation hinzugefügt wird, wobei die Prüfinformation anzeigt, dass die dem ersten Netzwerk-Knoten (11) zugeordnete Identifikationsinformation dem Internet-Protokoll-Datenpaket hinzugefügt wurde.

6. Verfahren nach einem der vorhergehenden Ansprüche, **dadurch gekennzeichnet, dass** die Prüfinformation ein einstelliger Binärwert ist.

7. Telekommunikationsnetz (100) zur Erhöhung der Sicherheit beim paketorientierten Datenaustausch gemäß einem Internet Protokoll zwischen Netzwerk-Knoten des Telekommunikationsnetzes (100), wobei das Telekommunikationsnetz (100) derart konfiguriert ist, dass zur Übertragung eines Internet Protokoll-Datenpakets wenigstens ein erster Netzwerk-Knoten (11) eines ersten Anbieters von Telekommunikationsdienstleistungen und ein zweiter Netzwerk-Knoten (12) zusammenwirken, wobei der zweite Netzwerk-Knoten (12) ein Nachbarknoten des ersten Netzwerk-Knoten (11) ist, wobei dem ersten Netzwerk-Knoten (11) eine Identifikationsinformation zugeordnet ist, wobei der zweite Netzwerk-Knoten (12) Zugriff auf die dem ersten Netzwerk-Knoten (11) zugeordnete Identifikationsinformation hat, wobei das Telekommunikationsnetz (100) außerdem derart konfiguriert ist, dass:
-- dem Internet-Protokoll-Datenpaket durch den ersten Netzwerk-Knoten (11) die Identifikationsinformation des ersten Netzwerk-Knoten (11) hinzugefügt wird,
-- das Internet-Protokoll-Datenpaket zum zweiten Netzwerk-Knoten (12) übertragen wird,
-- durch den zweiten Netzwerk-Knoten (12) eine Prüfung des Internet-Protokoll-Datenpakets durchgeführt wird, wobei die Prüfung durch den zweiten Netzwerk-Knoten die Prüfung der Identifikationsinformation umfasst, wobei das Internet-Protokoll-Datenpaket vom zweiten Netzwerk-Knoten (12) dann verworfen wird, wenn die Identifikationsinformation des Internet-Protokoll-Datenpaket nicht mit der dem ersten Netzwerk-Knoten (11) zugeordneten Identifikationsinformation übereinstimmt, mit die der zweite Netzwerk-Knoten (12) eine Anbindung hat, **dadurch gekennzeichnet, dass** das Telekommunikationsnetz (100) außerdem derart konfiguriert ist, dass zur Übertragung des Internet Protokoll-Datenpakets neben dem ersten und zweiten Netzwerk-Knoten (12) ein dritter Netzwerk-Knoten (13) zusammenwirkt und dass das Internet-Protokoll-Datenpaket eine Sprung-Information aufweist, die bei jeder Übertragung von einem vorherigen Netzwerk-Knoten zu einem weiteren Netzwerk-Knoten verändert wird, wobei der dritte Netzwerk-Knoten (13) derart konfiguriert ist, aufgrund der Sprung-Information des Internet-Protokoll-Datenpaket zu erkennen, dass die Prüfung der Identifikationsinformation im zweiten Netzwerk-Knoten (12) erfolgreich war, und das Internet-Protokoll-Datenpaket weiterzuleiten.

8. Telekommunikationsnetz (100) nach Anspruch 7, **dadurch gekennzeichnet, dass** das Telekommunikationsnetz (100) ein Weitverkehrsnetz ist.

9. Telekommunikationsnetz (100) nach einem der Ansprüche 7 oder 8, **dadurch gekennzeichnet, dass** die Identifikationsinformation bei der Verwendung von IPv4 und bei der Verwendung von IPv6 wenigstens 24 Binärstellen umfasst.

10. Telekommunikationsnetz (100) nach einem der Ansprüche 7, 8 oder 9, **dadurch gekennzeichnet, dass** der erste Netzwerk-Knoten (11) derart konfiguriert ist, dass dem Internet-Protokoll-Datenpaket durch den ersten Netzwerk-Knoten (11) neben der Identifikationsinformation des ersten Netzwerk-Knoten (11) eine Prüfinformation hinzugefügt wird, wobei die Prüfinformation anzeigt, dass die dem ersten Netzwerk-Knoten (11) zugeordnete Identifikationsinformation dem Internet-Protokoll-Datenpaket hinzugefügt wurde.

11. Computerprogramm mit Programmcodemitteln, mit deren Hilfe alle Schritte eines Verfahrens nach einem der Ansprüche 1 bis 6 durchgeführt werden, wenn das Computerprogramm auf einer programmierbaren Einrichtung und/oder auf einem Netzwerk-Knoten (11, 12, 13), insbesondere in Teilen auf mehreren Netzwerk-Knoten (11, 12, 13) eines Telekommunikationsnetzes, ausgeführt wird.

12. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 6 durchgeführt werden, wenn das Computerprogramm auf einer programmierbaren Einrichtung und/oder auf einem Netzwerk-Knoten (11, 12, 13), insbesondere in Teilen auf mehreren Netzwerk-Knoten (11, 12, 13) eines Telekommunikationsnetzes (100), ausgeführt wird.

## Claims

1. Method for increasing security in packet-oriented data exchange according to an Internet Protocol between network nodes of a telecommunication network (100), wherein in order to transfer an Internet Protocol data packet at least one first network node (11) of a first provider of telecommunication services and one second network node (12) co-operate, wherein the second network node (12) is a neighbouring node of the first network node (11), wherein identification information is allocated to the first network node (11), wherein the second network node (12) has access to the identification information allocated to the first network node (11), wherein the method comprises the following method steps:
- in a first method step the identification information of the first network node (11) is added to the Internet Protocol data packet by the first network node (11),
- in a second method step the Internet Protocol data packet is transferred to the second network node (11),
- in a third method step the second network node (12) checks the Internet Protocol data packet, wherein the checking by the second network node includes checking the identification information, wherein the Internet Protocol data packet is rejected by the second network node (12) if the identification information of the Internet Protocol data packet does not match the identification information allocated to the first network node (11) to which identification information the second network node (12) has access,
**characterised in that** in order to transfer the Internet Protocol data packet a third network node (13) co-operates along with the first and second network nodes (12), and **in that** the Internet Protocol data packet comprises skip information which changes upon each transfer from a previous network node to a subsequent network node, wherein the third network node (13) uses the skip information of the Internet Protocol data packet to recognise that the checking of the identification information in the second network node (12) was successful, and the third network node forwards the Internet Protocol data packet.

2. Method as claimed in claim 1, **characterised in that** the identification information includes at least 24 binary positions when using IPv4 and when using IPv6.

3. Method as claimed in any one of the preceding claims, **characterised in that** the identification information includes at least six binary coded decimals when using IPv4.

4. Method as claimed in any one of the preceding claims, **characterised in that** the identification information includes at least five hexdecimals when using IPv6.

5. Method as claimed in any one of the preceding claims, **characterised in that** checking information is added to the Internet Protocol data packet by the first network node (11) in addition to the identification information of the first network node (11), wherein the checking information indicates that the identification information allocated to the first network node (11) was added to the Internet Protocol data packet.

6. Method as claimed in any one of the preceding claims, **characterised in that** the checking information is a single-digit binary number.

7. Telecommunication network (100) for increasing security in packet-oriented data exchange according to an Internet Protocol between network nodes of the telecommunication network (100), wherein the telecommunication network (100) is configured such that, in order to transfer an Internet Protocol data packet, at least one first network node (11) of a first provider of telecommunication services and one second network node (12) co-operate, wherein the second network node (12) is a neighbouring node of the first network node (11), wherein identification information is allocated to the first network node (11), wherein the second network node (12) has access to the identification information allocated to the first network node (11), wherein the telecommunication network (100) is further configured such that:
- the identification information of the first network node (11) is added to the Internet Protocol data packet by the first network node (11),
- the Internet Protocol data packet is transferred to the second network node (11),
- the second network node (12) checks the Internet Protocol data packet, wherein the checking by the second network node includes checking the identification information, wherein the Internet Protocol data packet is rejected by the second network node (12) if the identification information of the Internet Protocol data packet does not match the identification information allocated to the first network node (11) to which the second network node (12) has a connection,
**characterised in that** the telecommunication network (100) is further configured such that, in order to transfer the Internet Protocol data packet, a third network node (13) co-operates along with the first and second network nodes (12), and **in that** the Internet Protocol data packet comprises skip information which changes upon each transfer from a previous network node to a further network node, wherein the third network node (13) is configured to use the skip information of the Internet Protocol data packet to recognise that the checking of the identification information in the second network node (12) was successful and to forward the Internet Protocol data packet.

8. Telecommunication network (100) as claimed in claim 7, **characterised in that** the telecommunication network (100) is a wide area network.

9. Telecommunication network (100) as claimed in any one of claims 7 or 8, **characterised in that** the identification information includes at least 24 binary positions when using IPv4 and when using IPv6.

10. Telecommunication network (100) as claimed in any one of claims 7, 8 or 9, **characterised in that** the first network node (11) is configured such that checking information is added to the Internet Protocol data packet by the first network node (11) in addition to the identification information of the first network node (11), wherein the checking information indicates that the identification information allocated to the first network node (11) was added to the Internet Protocol data packet.

11. Computer program having program code means which are used to perform all the steps of a method as claimed in any one of claims 1 to 6 when the computer program is run on a programmable device and/or on a network node (11, 12, 13), more particularly in parts on a plurality of network nodes (11, 12, 13) of a telecommunication network.

12. Computer program product having a computer-readable medium and a computer program stored on the computer-readable medium, having program code means which are suitable to perform all the steps of a method as claimed in any one of claims 1 to 6 when the computer program is run on a programmable device and/or on a network node (11, 12, 13), more particularly in parts on a plurality of network nodes (11, 12, 13) of a telecommunication network (100).

## Revendications

1. Procédé destiné à augmenter la sécurité lors de l'échange de données orienté paquets selon un protocole internet entre des noeuds de réseau d'un réseau de télécommunications (100), dans lequel au moins un premier noeud de réseau (11) d'un premier fournisseur de services de télécommunications et un deuxième noeud de réseau (12) coopèrent pour la transmission d'un paquet de données du protocole internet, le deuxième noeud de réseau (12) étant un noeud voisin du premier noeud de réseau (11), une information d'identification étant associée au premier noeud de réseau (11), le deuxième noeud de réseau (12) ayant accès à l'information d'identification associée au premier noeud de réseau (11), le procédé comportant les étapes de procédé suivantes :
- dans une première étape de procédé, l'information d'identification du premier noeud de réseau (11) est ajoutée au paquet de données du protocole internet par le premier noeud de réseau (11),
- dans une deuxième étape de procédé, le paquet de données du protocole internet est transmis au deuxième noeud de réseau (11),
- dans une troisième étape de procédé, une vérification du paquet de données du protocole internet est effectuée par le deuxième noeud de réseau (12), la vérification par le deuxième noeud de réseau comprenant la vérification de l'information d'identification, le paquet de données du protocole internet étant rejeté par le deuxième noeud de réseau (12) lorsque l'information d'identification du paquet de données du protocole internet ne correspond pas à l'information d'identification associée au premier noeud de réseau (11), à laquelle le deuxième noeud de réseau (12) a accès,
**caractérisé en ce que**
pour la transmission du paquet de données du protocole internet, un troisième noeud de réseau (13) coopère en plus du premier et du deuxième noeud de réseau (12) et **en ce que** le paquet de données du protocole internet comporte une information de saut, qui est modifiée à chaque transmission d'un noeud de réseau précédent à un autre noeud de réseau, le troisième noeud de réseau (13) détectant, en raison de l'information de saut du paquet de données du protocole internet, que la vérification de l'information d'identification dans le deuxième noeud de réseau (12) a réussi et transférant le paquet de données du protocole internet.

2. Procédé selon la revendication 1, **caractérisé en ce que** l'information d'identification comprend au moins 24 chiffres binaires lors de l'utilisation d'IPv4 et lors de l'utilisation d'IPv6.

3. Procédé selon l'une des revendications précédentes, **caractérisé en ce que** l'information d'identification comprend au moins six chiffres décimaux codés binaire lors de l'utilisation d'IPv4.

4. Procédé selon l'une des revendications précédentes, **caractérisé en ce que** l'information d'identification comprend au moins cinq chiffres hexadécimaux lors de l'utilisation d'IPv6.

5. Procédé selon l'une des revendications précédentes, **caractérisé en ce que**, en plus de l'information d'identification du premier noeud de réseau (11), une information de vérification est ajoutée par le premier noeud de réseau (11) au paquet de données du protocole internet, l'information de vérification indiquant que l'information d'identification associée au premier noeud de réseau (11) a été ajoutée au paquet de données du protocole internet.

6. Procédé selon l'une des revendications précédentes, **caractérisé en ce que** l'information de vérification est une valeur binaire à un chiffre.

7. Réseau de télécommunications (100) destiné à augmenter la sécurité lors de l'échange de données orienté paquets selon un protocole internet entre des noeuds de réseau du réseau de télécommunications (100), le réseau de télécommunications (100) étant configuré de telle manière qu'au moins un premier noeud de réseau (11) d'un premier fournisseur de services de télécommunications et un deuxième noeud de réseau (12) coopèrent pour la transmission d'un paquet de données du protocole internet, le deuxième noeud de réseau (12) étant un noeud voisin du premier noeud de réseau (11), une information d'identification étant associée au premier noeud de réseau (11), le deuxième noeud de réseau (12) ayant accès à l'information d'identification associée au premier noeud de réseau (11), le réseau de télécommunications (100) étant en outre configuré de telle manière que :
- l'information d'identification du premier noeud de réseau (11) est ajoutée au paquet de données du protocole internet par le premier noeud de réseau (11),
- le paquet de données du protocole internet est transmis au deuxième noeud de réseau (12),
- une vérification du paquet de données du protocole internet est effectuée par le deuxième noeud de réseau (12), la vérification par le deuxième noeud de réseau comprenant la vérification de l'information d'identification, le paquet de données du protocole internet étant rejeté par le deuxième noeud de réseau (12) lorsque l'information d'identification du paquet de données du protocole internet ne correspond pas à l'information d'identification associée au premier noeud de réseau (11), à laquelle est rattaché le deuxième noeud de réseau (12),
**caractérisé en ce que** le réseau de télécommunications (100) est en outre configuré de telle manière que, pour la transmission du paquet de données du protocole internet, un troisième noeud de réseau (13) coopère, en plus du premier et du deuxième noeud de réseau (12), et que le paquet de données du protocole internet comporte une information de saut, qui est modifiée à chaque transmission d'un noeud de réseau précédent à un autre noeud de réseau, le troisième noeud de réseau (13) étant configuré de manière à détecter, en raison de l'information de saut du paquet de données du protocole internet, que la vérification de l'information d'identification dans le deuxième noeud de réseau (12) a réussi et à transférer le paquet de données du protocole internet.

8. Réseau de télécommunications (100) selon la revendication 7, **caractérisé en ce que** le réseau de télécommunications (100) est un réseau étendu.

9. Réseau de télécommunications (100) selon l'une des revendications 7 ou 8, **caractérisé en ce que** l'information d'identification comprend au moins 24 chiffres binaires lors de l'utilisation d'IPv4 et lors de l'utilisation d'IPv6.

10. Réseau de télécommunications (100) selon l'une des revendications 7, 8 ou 9, **caractérisé en ce que** le premier noeud de réseau (11) est configuré de telle manière que, en plus de l'information d'identification du premier noeud de réseau (11), une information de vérification est ajoutée par le premier noeud de réseau (11) au paquet de données du protocole internet, l'information de vérification indiquant que l'information d'identification associée au premier noeud de réseau (11) a été ajoutée au paquet de données du protocole internet.

11. Programme informatique comprenant des moyens de code de programme, à l'aide desquels toutes les étapes d'un procédé selon l'une des revendications 1 à 6 sont effectuées lorsque le programme informatique est exécuté sur un dispositif programmable et/ou sur un noeud de réseau (11, 12, 13), en particulier en partie sur plusieurs noeuds de réseau (11, 12, 13) d'un réseau de télécommunications.

12. Produit programme informatique comprenant un support lisible par ordinateur et un programme informatique enregistré sur le support lisible par ordinateur comprenant des moyens de code de programme, qui sont adaptés pour que toutes les étapes d'un procédé selon l'une des revendications 1 à 6 soient effectuées lorsque le programme informatique est exécuté sur un dispositif programmable et/ou sur un noeud de réseau (11, 12, 13), en particulier en partie sur plusieurs noeuds de réseau (11, 12, 13) d'un réseau de télécommunications (100).
